# EUROPEAN PATENT SPECIFICATION

(11) **EP 4 491 255 B1**
(45) Date of publication and mention of the grant of the patent: **01.04.2026**
(21) Application number: 23184335.0
(22) Date of filing: 10.07.2023
(51) Int. Cl.: B01D 53/04, B01D 53/26, B60H 1/00, B60H 3/02, B60H 3/06

(54) **SORPTION FILTER ELEMENT AND SORPTION FILTER DEVICE**
SORPTIONSFILTERELEMENT UND SORPTIONSFILTERVORRICHTUNG
ÉLÉMENT FILTRANT À SORPTION ET DISPOSITIF FILTRANT À SORPTION

(43) Date of publication of application: 15.01.2025
(73) Proprietor: MANN+HUMMEL GmbH, 71636 Ludwigsburg (DE)
(72) Inventor: MBADINGA MOUANDA, Gelase, 71636 Ludwigsburg (DE); EVLEKLI, Coskun, 71636 Ludwigsburg (DE); FALLBÖHMER, Stefan, 71636 Ludwigsburg (DE)
(74) Representative: Mann + Hummel Intellectual Property

(56) References cited:
- US-A- 5 725 639
- US-B2- 6 478 858

## Description

### TECHNICAL FIELD

The invention relates to a sorption filter element for a sorption filter device and to a sorption filter device comprising such a sorption filter element.

### BACKGROUND ART

In the case of vehicles that are at least partially electrically powered, it is advisable to save as much energy as possible in order to achieve the longest possible range. For reasons of comfort, the passenger compartment of such a vehicle can usually be air conditioned with the aid of an air conditioning system. With regard to the desired energy savings, it is advantageous if the air conditioning system for air conditioning the passenger compartment draws in as little fresh air as possible from the vehicle's surroundings and heats or cools it, but instead recirculates and air conditions the air in the passenger compartment.

In the aforementioned recirculation mode for air conditioning the passenger compartment, however, water contained in the exhaled air of occupants or passengers can accumulate in the passenger compartment, which can lead to fogging of windows, for example a windshield or side windows, of the motor vehicle. The reason for this is that the dehumidifying effect of an air conditioning system, which results from a dew point undershoot in the evaporator heat exchanger, cannot be used during the recirculation mode. This must be avoided or at least reduced with regard to safety aspects.

Furthermore, carbon dioxide contained in the exhaled air can also accumulate in the passenger compartment. This can lead to concentration problems or even health problems for the occupants. This, too, must be prevented or at least reduced with regard to both safety and health aspects, since in the worst-case scenario, an excessively high concentration of carbon dioxide in the passenger compartment air can reduce the driver's ability to concentrate to such an extent that accidents are imminent.
An example of a sorption-filter device and element for use in a motor vehicle is disclosed in US 5 725 639 A.

### SUMMARY

It is therefore an object of the invention to provide an improved sorption filter element for a sorption filter device.

Accordingly, a sorption filter element for a sorption filter device is provided. The sorption filter element comprises a heater, and a frame enclosing an intermediate space and comprising a separating wall running through the intermediate space, the separating wall being configured to receive a heater. The heater is configured to heat regeneration air within the intermediate space, and includes a heater grid through which the regeneration air flows. The sorption filter element further includes one or more sorption filter bodies comprising at least one sorbent, the one or more sorption filter bodies being configured to remove carbon dioxide and/or water from raw air to turn the raw air into clean air, and each of the one or more sorption filter bodies comprising a sorption body grid through which the clean air flows into the intermediate space and through which the heated regeneration air flows out of the intermediate space. The separating wall is configured to be guided along guide tracks of a housing of the sorption filter device when moving the sorption filter element out of the housing and into the housing, and the sorption filter element further includes an end cap configured to close the housing, and the end cap being attached to the frame. This enables an easy replacement of the sorption filter bodies. The guide tracks are part of the housing. The guide tracks can be provided at a ceiling and at a bottom of the housing. Thus, the frame can be pulled out of the housing by pulling the end cap away from the housing. Since the separating wall carries the heater, the heater and the end cap do not need to be removed from the frame for exchanging the sorption filter bodies.

The sorption filter element or the sorption filter bodies are suitable for adsorbing and/or absorbing carbon dioxide and water. However, also substances like nitrogen oxides (NOX) and/or volatile organic compounds (VOCs) can be adsorbed and/or absorbed by the sorption filter element or the sorption filter bodies. Examples of volatile organic compounds are higher hydrocarbons. The sorption filter element or the sorption filter bodies may also be suitable for adsorbing and/or absorbing sulfur dioxide (SO2).

In the present context, "sorption" refers to processes that lead to an enrichment of a substance, for example carbon dioxide or water, within a phase or on an interface between two phases. Accumulation within a phase is referred to as absorption, while accumulation at the interface is referred to as adsorption. In the present context, "desorption" refers to processes in which atoms or molecules, in particular carbon dioxide or water, leave the surface of a solid. Desorption thus generally represents the reverse process of sorption. By applying heat to the sorbent, the adsorbed and/or absorbed substances can be released from the sorbent.

In a sorption mode, the sorption filter element or the sorption filter bodies adsorb and/or absorb different substances like carbon dioxide and/or water. In a desorption mode, the enriched substances can be released from the sorption filter element or the sorption filter bodies. Thus, the sorption filter element or the sorption filter bodies can be regenerated. In the desorption mode, heat is applied to the sorption filter element, or the sorption filter bodies, in particular to the sorbent. The sorption filter element may be a pure adsorption filter element or may be designated as such. The sorption filter bodies may be pure adsorption filter bodies or may be designated as such. Preferably, the sorption filter element or the sorption filter bodies can be easily and quickly replaced. The sorption mode may also be, or be designated as, a pure adsorption mode. The desorption mode may also be referred to as regeneration mode.

The sorption filter element or the sorption filter bodies preferably comprise several sorbents. In particular, a sorbent suitable to sorb, especially to adsorb, carbon dioxide may be provided. This sorbent may be referred to as carbon dioxide sorbent or CO2 sorbent. Another sorbent may be provided that is suitable to sorb, especially adsorb, water. This sorbent may be referred to as water sorbent or H2O sorbent. The sorbents may be in granular or fibrous form, in particular in bulk form. In particular, the sorbents are fixed by means of a carrier material. The sorbents may also be pure adsorbents or be designated as such. The raw air may be guided through the sorbents in a parallel or serial way.

In the desorption mode, regeneration air is be taken from the intermediate space. The clean air can be used as regeneration air. Initially, the regeneration air is unloaded. In the desorption mode, the unloaded regeneration air is loaded with carbon dioxide and water and supplied to an environment of the sorption filter device as loaded regeneration air. By the fact that the regeneration air is "unloaded" with carbon dioxide and water, it is to be understood in particular that the regeneration air can absorb stored carbon dioxide and water in the sorption filter element or the sorption filter bodies being in desorption mode. However, this does not preclude the unloaded regeneration air from also containing a certain amount of carbon dioxide and water. However, the unloaded regeneration air is not saturated with carbon dioxide and water.

The sorption filter device can be part of a heating, ventilation, and air conditioning (HVAC) system of a vehicle. Preferably, the sorption filter device comprises a housing which encompasses the sorption filter element. The sorption filter element is exchangeable and can be moved out of the housing and back into the housing. Preferably however, the sorption filter element itself is not exchanged but only the sorption filter bodies are exchanged. The sorption filter bodies can be exchanged when the sorption filter element is moved out of the housing.

The frame is received within the housing and supports the sorption filter bodies. The frame can be made of a plastic material. The frame is preferably hollow and encloses or encompasses the intermediate space. In the sorption mode, raw air flows from outside the intermediate space through at least some of the sorption filter bodies into the intermediate space and turns into clean air because carbon dioxide and/or water are removed from the raw air by means the sorbent or the sorbents. In the desorption mode, unloaded regeneration air flows from inside the intermediate space through at least some of the sorption filter bodies out of the intermediate space and turns into loaded regeneration air because carbon dioxide and/or water are removed from the sorbent or the sorbents by means of the heated and unloaded regeneration air.

The separating wall "running through" the intermediate space in the present context means that the separating wall separates or divides the intermediate space into a plurality of segments or sections, namely into a first intermediate space section and a second intermediate space section. The separating wall is arranged between the first intermediate space section and the second intermediate space section. The separating wall is arranged at least partly within the intermediate space. However, the separating can at least partly be arranged outside the intermediate space.

Preferably, the separating wall comprises a receiving section for receiving the heater. Thus, the separating wall or the receiving section carries or supports the heater. In particular, the heater is part of the sorption filter element. The sorption filter element preferably comprises exactly one heater. The heater can be exchangeable. The heater can be a PTC-heater (positive temperature coefficient). Preferably, the heater comprises a frame that carries the heater grid. The frame is received in the receiving section of the separating wall. The frame can be made of a plastic or ceramic material. The heater can comprise one or more than one thermocouple. Preferably, on each side of the separating wall, one thermocouple is provided.

The heater grid can be named first grid. Thus, the terms "heater grid" and "first grid" can be exchanged in the present context. The heater grid can be made of a metal wire. The heater grid is energized by a power source, for example a battery, to supply heat to the sorbent or the sorbents in the regeneration mode via the unloaded regeneration air that is heated by the heater. The heater grid can have a zig-zag-shape. The heater or the heater grid is fluid permeable. The heater or the heater grid being "fluid permeable" in this context means that a fluid, in particular regeneration air, can be guided through the heater or the heater grid so that the air comes into contact with the heater grid. In this way, heat is supplied to the regeneration air which is thus heated up. The heated regeneration air supplies heat to the sorbents. In particular, the heater heats the regeneration air in the intermediate space when the regeneration air passes the heater grid. In particular, the heater heats the regeneration air in the intermediate space when the regeneration air flows from the first intermediate space section into the second intermediate space section or vice versa.

"Turning" the raw air into clean air means that the carbon dioxide and/or water is removed from the raw air by means of the sorbents. The removal can be done by means of adsorption and/or absorption processes. As mentioned before, the clean air can be used as unloaded regeneration air in the regeneration mode. The unloaded regeneration air is heated up by means of the heater and guided through the sorption filter body needing being regenerated.

The sorption filter body grid is fluid permeable so that clean air and regeneration air can pass the sorption filter body grid. The sorption filter body grid can be a metal or plastic mesh or the like. The heated regeneration air preferably leaves the intermediate space via the sorption filter body grid, passes the sorbent or the sorbents and leaves the sorption filter element as loaded regeneration air. The loaded regeneration air is discharged into the environment. The sorption filter body grid can be named second grid. Thus, the terms "sorption filter body grid" and "second grid" can be exchanged in the present context.

Since the heater can be received in the separating wall, a single heater can be used to supply heat to a plurality of sorption filter bodies. This reduces costs and allows a compact design of the sorption filter element. An easy replacement of the sorption filter bodies is possible. Preferably, the sorption filter bodies are the only non-lifetime parts of the sorption filter element.

In embodiments, the one or more sorption filter bodies are disposed on respective opposing sides of the frame. The sorption filter bodies being disposed on respective opposing sides of the frame can mean that the sorption filter bodies face each other. In this case two sorption filter bodies can be assigned to each of the intermediate space sections. In particular, the frame comprises a first carrier and a second carrier, wherein each of the carriers carries or supports at least one of the sorption filter bodies. The carriers preferably enclose the intermediate space. However, "opposing sides" can also mean that each carrier has two sides, wherein each of the sides encloses a part of one of the intermediate space sections. Thus, at least one of the carriers carries one or more sorption filter bodies.

In embodiments, the heated regeneration air flows out of the intermediate space into an environment via an outlet. The heated regeneration air passes the sorption filter bodies and flows into an interior space of the housing. The heated regeneration is loaded with carbon dioxide and/or water and flows into the interior space of the housing. The loaded regeneration air leaves the housing via the outlet. The outlet can be part of an inlet/outlet apparatus.

In embodiments, the separating wall is disposed along a central portion of the intermediate space. In other words, the separating wall runs through the intermediate space in a centered way. In particular, the separating wall divides the intermediate space into two identic intermediate space sections.

In embodiments, the separating wall partitions the intermediate space into a first intermediate space section and a second intermediate space section, and the regeneration air flows through the heater grid from the first intermediate space section into the second intermediate space section or vice versa. The intermediate space sections preferably have the same size and geometry.

In embodiments, the frame comprises a first carrier and a second carrier configured to carry the one or more sorption filter bodies, the first carrier and the second carrier enclosing the intermediate space. Preferably, the separating wall supports or carries the carriers. In particular, each carrier supports or carries two sorption filter bodies.

In embodiments, the frame comprises protrusions configured to press against the sorption filter body grid. This presses the sorption body grid against the sorbents. A movement of the sorbents is prevented in that way. This leads to noise reduction. The protrusions can be dome shaped.

In embodiments, the sorption filter element further comprises two pairs of the one or more sorption filter bodies, the two pairs respectively forming sorption filter apparatuses configured to be interchangeably brought from a sorption mode into a desorption mode and vice versa. Preferably, the sorption filter element has two sorption filter apparatuses. Each sorption filter apparatus is assigned to one of the intermediate space sections.

In embodiments, each of the two pairs of the one or more of the sorption filter bodies is arranged in a V-configuration or a parallel configuration. In other words, the sorption filter bodies of each sorption filter apparatus are arranged oblique to each other.

Furthermore, a sorption filter device includes the sorption filter element as explained before and a housing configured to receive the sorption filter element. As mentioned before, the sorption filter element can be pulled out of the housing and moved into the housing for exchanging the sorption filter bodies.

In embodiments, the sorption filter device further comprises an inlet/outlet apparatus attached to the housing and configured to supply the raw air to the sorption filter element, and guide the clean air away from the sorption filter element. The inlet/outlet apparatus lets the raw air into the housing and discharges the clean air from the housing.

In embodiments, the inlet/outlet apparatus comprises an outlet configured to discharge the heated regeneration air into an environment. The outlet can be tube shaped. As mentioned before, the heated regeneration air is loaded with carbon dioxide and/or water. Thus, the heated regeneration air can be named loaded regeneration air.

In embodiments, the inlet/outlet apparatus comprises a first inlet/outlet and a second inlet/outlet, each the first inlet/outlet and the second inlet/outlet branching into two fluid channels, and the two fluid channels of the second inlet/outlet being fluidly connected to the intermediate space. The first inlet/outlet can serve as inlet for letting the raw air into the housing. Thus, the first inlet/outlet can be named raw air inlet. The second inlet/outlet can serve as outlet for letting the clean air out of the housing. Thus, the second inlet/outlet can be named clean air outlet. The clean air is preferably discharged into one of the fluid channels of the second inlet/outlet.

In embodiments, the inlet/outlet apparatus further comprises movable flaps configured to alternate opening and closing one of the two fluid channels of the first inlet/outlet and one of the two fluid channels of the second inlet/outlet. Preferably, the first inlet/outlet has a first flap, and the second inlet/outlet has a second flap. The first flap can be named upper flap or top flap. The second flap can be named lower flap or bottom flap. The flaps are connected to each other by means of a rotation shaft that can be driven by means of a drive. By means of the flaps one of the fluid channels of both inlets/outlets can be closed, wherein the other fluid channel is open. By means of the flaps, an alternating operation of the sorption mode and the desorption mode is possible. The second flap can also open and close a window that is provided in each of the two fluid channels of the second inlet/outlet. The windows are fluidly connected to the outlet that discharges the loaded regeneration air into the environment. In the desorption mode, the respective window is opened so that the loaded regeneration air can leave the housing or the inlet/outlet apparatus.

### BRIEF DESCRIPTION OF DRAWINGS

The figures show:
- Fig. 1: a schematic view of one embodiment of a motor vehicle;
- Fig. 2: a schematic view of one embodiment of a sorption filter device for the motor vehicle according to Fig. 1;
- Fig. 3: a schematic perspective view of the sorption filter device according to Fig. 2;
- Fig. 4: a further schematic perspective view of the sorption filter device according to Fig. 2;
- Fig. 5: a schematic perspective exploded view of the sorption filter device according to Fig. 2;
- Fig. 6: a schematic front view of the sorption filter device according to Fig. 2;
- Fig. 7: a schematic side view of the sorption filter device according to Fig. 2;
- Fig. 8: a cross-sectional view of the sorption filter device according to the sectional line IIX-IIX of Fig. 7;
- Fig. 9: a further cross-sectional view of the sorption filter device according to the sectional line IX-IX of Fig. 7;
- Fig. 10: a cross-sectional view of the sorption filter device according to the sectional line X-X of Fig. 7; and
- Fig. 11: a schematic view of one embodiment of a heater for the sorption filter device according to Fig. 2.

In the figures, identical or functionally identical elements have been given the same reference signs unless otherwise indicated.

### DETAILED DESCRIPTION

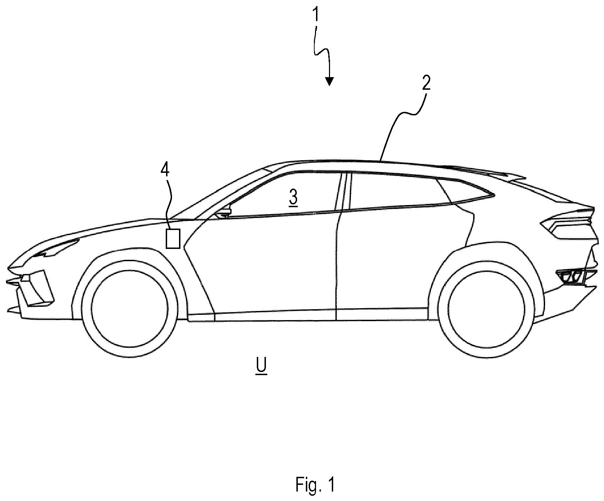

Fig. 1 shows a schematic view of an embodiment of a motor vehicle 1. The motor vehicle 1 is preferably an electric vehicle or a hybrid vehicle. However, the motor vehicle 1 may also be driven by means of an internal combustion engine. The motor vehicle 1 comprises a body 2 which encloses an enclosed air volume 3. "Enclosed" in this context means that the body 2 defines boundaries or a geometric extension of the enclosed air volume 3. However, this does not necessarily mean that the enclosed air volume 3 cannot be in air exchange with an environment U of the motor vehicle 1.

The enclosed air volume 3 is an interior or passenger compartment of the motor vehicle 1. However, the enclosed air volume 3 may also be associated with a watercraft, a construction machine or a construction vehicle, a rail vehicle, an agricultural machine or an agricultural vehicle, or an aircraft. However, the enclosed air volume 3 may also be part of a building or a stationary machine.

In the following, however, it is assumed that the enclosed air volume 3 is the passenger compartment of the motor vehicle 1. Therefore, the enclosed air volume 3 is hereinafter referred to as the passenger compartment. The passenger compartment 3 can be air conditioned by means of a heating, ventilation, and air conditioning (HVAC) system 4. To extend a range of such an electrically driven motor vehicle 1, it is desirable to save as much energy as possible. With reference to the HVAC system 4, this means that it should draw in as little fresh air as possible from the environment U of the motor vehicle 1 to air condition the passenger compartment 3.

However, when recirculated air taken in the passenger compartment 3 is used to air condition the passenger compartment 3, water (H2O) contained in the exhaled air of occupants or passengers may accumulate in the passenger compartment 3, which may cause windows, for example a windshield or side windows, of the motor vehicle 1 to fog. This must be avoided or at least reduced with regard to safety aspects. Furthermore, carbon dioxide (CO2) contained in the exhaled air can also accumulate in the passenger compartment 3. This can lead to concentration problems or even health impairments for the occupants. This, too, must be prevented or at least reduced with regard to both safety and health aspects.

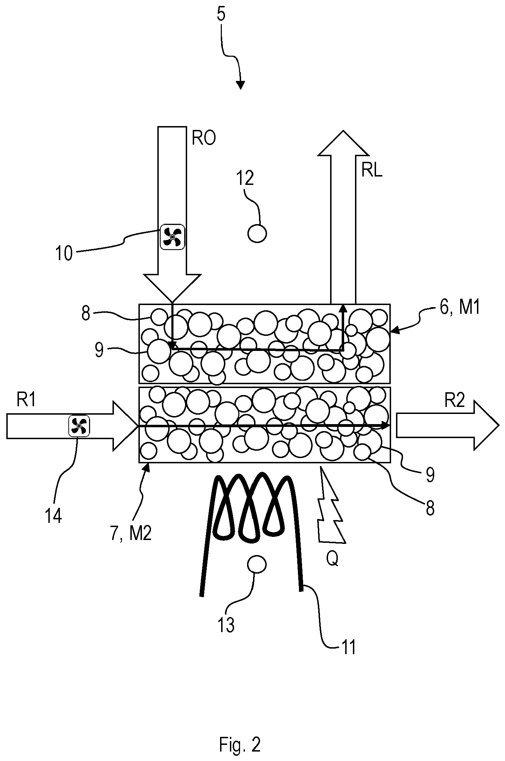

Fig. 2 shows a schematic view of an embodiment of a sorption filter device 5 for the combined reduction of CO2 and H2O, in particular water vapor, within the passenger compartment 3. The sorption filter device 5 is part of the HVAC system 4. With the aid of the sorption filter device 5, the previously mentioned disadvantages can be prevented or their effect at least reduced. In addition, the sorption filter device 5 can also be used to prevent impurities from the environment U from entering the passenger compartment 3, since the preparation of the circulating air means that the intake of ambient air can be largely dispensed with.

The sorption filter device 5 comprises a first sorption filter apparatus 6 and a second sorption filter apparatus 7. "Sorption" is a collective term for processes that lead to an accumulation of a substance within a phase or at an interface between two phases. The enrichment within a phase is more precisely called absorption, and that at the interface adsorption. This means that the sorption filter apparatuses 6, 7 are suitable for adsorbing and/or absorbing substances such as CO2 and H2O, but also nitrogen oxides (NOX) and/or volatile organic compounds (VOCs). Examples of volatile organic compounds are higher hydrocarbons. The sorption filter apparatuses 6, 7 may also be suitable for adsorbing and/or absorbing sulfur dioxide (SO2). Preferably, however, the sorption filter apparatuses 6, 7 are pure adsorbing units or may be designated as such.

The sorption filter apparatuses 6, 7 are preferably interchangeable and, as will be explained further below, can be operated alternately in a sorption mode M1 and in a desorption mode M2. The sorption mode M1 may also be referred to as the adsorption mode. The desorption mode M2 may also be referred to as regeneration mode. That is, the first sorption filter apparatus 6 is in the sorption mode M1 when the second sorption filter apparatus 7 is in the desorption mode M2 and vice versa. Thus, both sorption filter apparatuses 6, 7 are never in the same mode M1, M2 at the same time. Preferably, the sorption filter apparatuses 6, 7 each have a cartridge shape so that they can be easily exchanged.

Each sorption filter apparatus 6, 7 comprises a first sorbent 8 and a second sorbent 9. Preferably, the sorbents 8, 9 are adsorbents or can be designated as such. For example, the first sorbent 8 is suitable for adsorbing CO2. Accordingly, the second sorbent 9 may be suitable to adsorb H2O. The two sorbents 8, 9 may thus remove H2O and CO2 from the passenger compartment 3. The first sorbent 8 is illustrated with small circles. The second sorbent 9 is illustrated with large circles. Other sorbents may also be provided, suitable for sorbing NOX or VOCs, for example. Thus, any number of different sorbents 8, 9 can be provided for processing the circulating air in the passenger compartment 3.

For example, in addition to the sorbents 8, 9, at least one further sorbent or also several further sorbents (not shown) are provided which are suitable for removing fine particles, NOx and/or VOCs from raw air RO. The further sorbents may be introduced between two carrier layers, in particular carrier layers made of a non-woven fabric. Alternatively, the sorbents 8, 9 and the further sorbents may be mixed together. The further sorbents may comprise activated carbon which, in particular in the form of a bulk, is preferably introduced between the two carrier layers. The further sorbent or sorbents may be mixed with the first sorbent 8 and/or with the second sorbent 9 to build up one or more mixed bulk layers.

Furthermore, the sorption filter apparatuses 6, 7 can also be suitable for removing allergens, bacteria and/or viruses from the raw air RO in addition to CO2 and H2O. This can be done by a functional coating of carrier materials, for example non-wovens, or by a functional coating of the sorbents 8, 9. Furthermore, the sorption filter apparatuses 6, 7 can have at least one fragrance component from a comfort aspect.

The sorbents 8, 9 can each be in the form of spherical granules. Preferably, the sorbents 8, 9 are fixed to a carrier material or are fixed with the aid of a carrier material. The sorption filter apparatuses 6, 7 can each have a cylindrical, in particular a hollow-cylindrical, a pie-shaped or a rectangular geometry. By a "pie-shaped" geometry is meant in particular a flat circular-cylindrical geometry.

In Fig. 2, the first sorption filter apparatus 6 is in the previously mentioned sorption mode M1. The second sorption filter apparatus 7 is in the desorption mode M2. In the sorption mode M1, raw air RO loaded with CO2 and H2O from the passenger compartment 3 is fed to the first sorption filter apparatus 6. A first blower 10 may be provided for this purpose. The raw air RO is passed through the first sorption filter apparatus 6 at least in sections, with the sorbents 8, 9 purifying the raw air RO of CO2 and H2O. The purified raw air RO is fed back to the passenger compartment 3 as clean air RL.

The mechanism comprises a heater 11. The heater 11 is designed to supply heat Q either to the first sorption filter apparatus 6 or to the second sorption filter apparatus 7. In other words, the heater 11 can be switched between the first sorption filter apparatus 6 and the second sorption filter apparatus 7. By means of the heater 11, heat Q can be supplied to the sorbents 8, 9. In the sorption mode M1, the heater 11 does not supply heat Q to the respective sorption filter apparatus 6, 7, whereas in the desorption mode M2, the heater 11 supplies heat Q to the respective sorption filter apparatus 6, 7. In Fig. 2, the heater 11 only supplies heat Q to the second sorption filter apparatus 7, which is in the desorption mode M2, and not to the first sorption filter apparatus 6 which is in the sorption mode M1.

The heater 11 can be a PTC-heater (positive temperature coefficient). However, heat Q may also be introduced by any other means. For example, heat Q may be waste heat from an electric motor used to drive the motor vehicle 1. Heat Q may also be waste heat from a conventional internal combustion engine, a battery cooling system, or a fuel cell cooling circuit. The heater 11 may also be a heat exchanger or comprise a heat exchanger. Thermocouples 12, 13 can be assigned to the heater 11. There can be provided a first thermocouple 12 that is assigned to the first sorption filter apparatus 6 and a second thermocouple 13 that is assigned to the second sorption filter apparatus 7.

In the desorption mode M2, unloaded regeneration air R1 is supplied to the second sorption filter apparatus 7 being loaded with CO2 and H2O. A second blower 14 can be used for this purpose. By the fact that the unloaded regeneration air R1 is "unloaded" with CO2 and H2O, it is to be understood that the unloaded regeneration air R1 can absorb CO2 and H2O stored in the second sorption filter apparatus 7. That is, the unloaded regeneration air R1 may also have some content of CO2 and H2O. However, the unloaded regeneration air R1 is not saturated with CO2 and H2O. The unloaded regeneration air R1 can be taken from the passenger compartment 3 or the environment U, for example.

When the sorbents 8, 9 are heated in the desorption mode M2 of the second sorption filter apparatus 7, they release CO2 and H2O to the unloaded regeneration air R1. In other words, CO2 and H2O are desorbed. A temperature above 55 °C is preferably required for desorption. The unloaded regeneration air R1 is passed through the second sorption filter apparatus 7, absorbs CO2 and H2O there and is discharged from the second sorption filter apparatus 7 as loaded regeneration air R2. In particular, the loaded regeneration air R2 is supplied to the environment U.

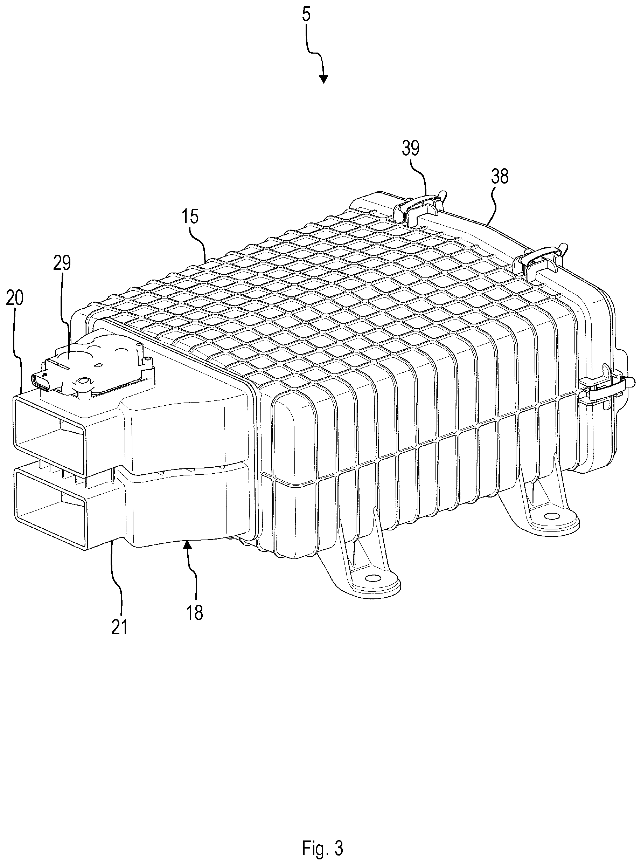

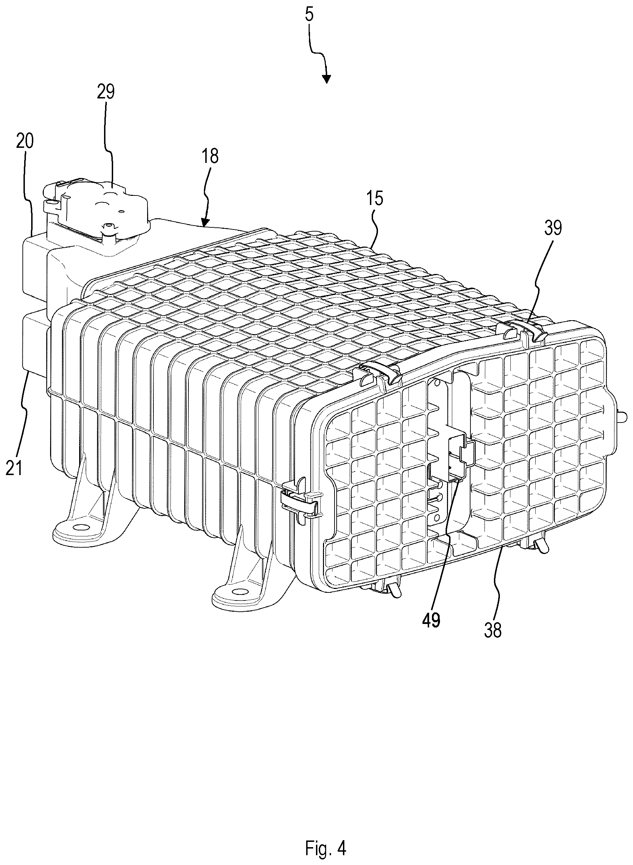

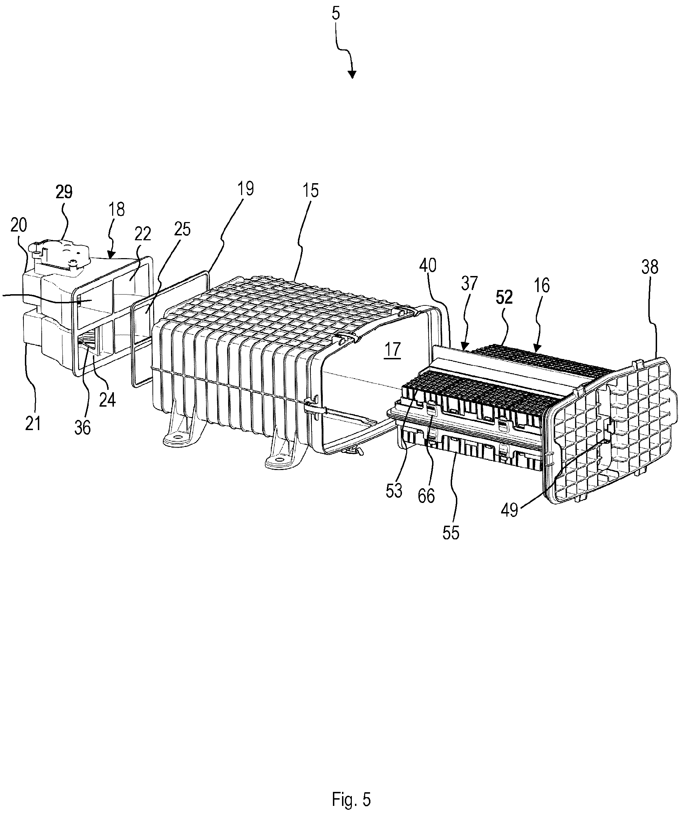

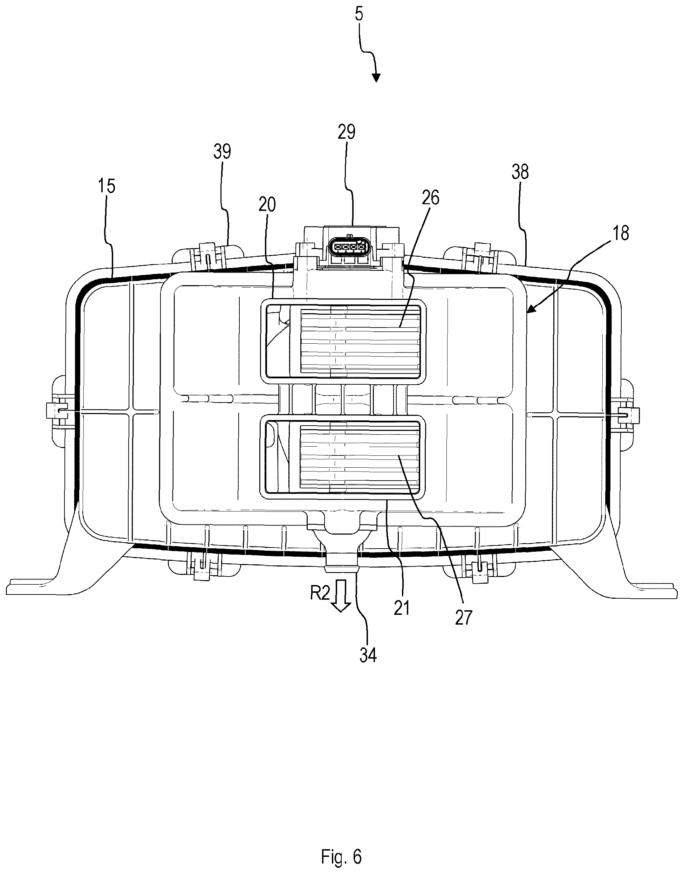

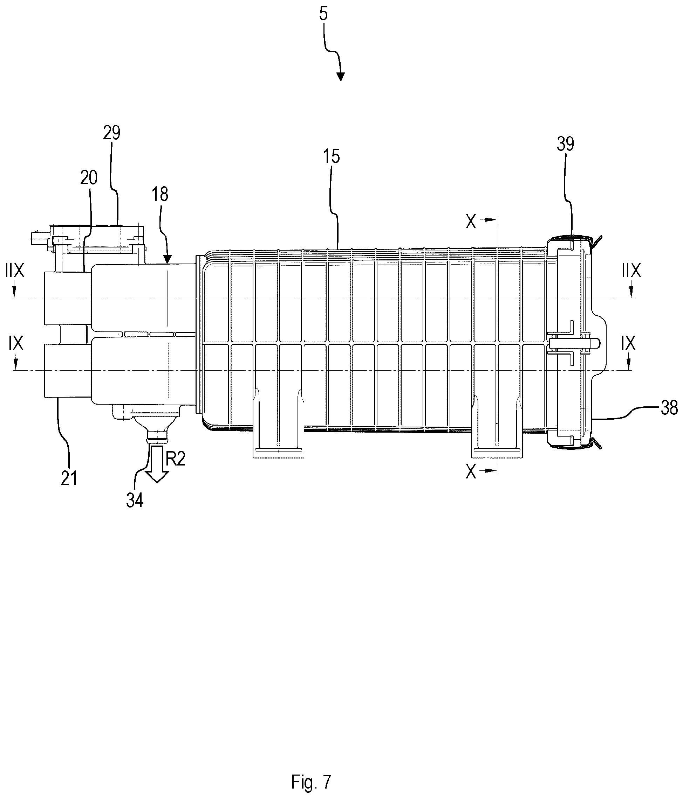

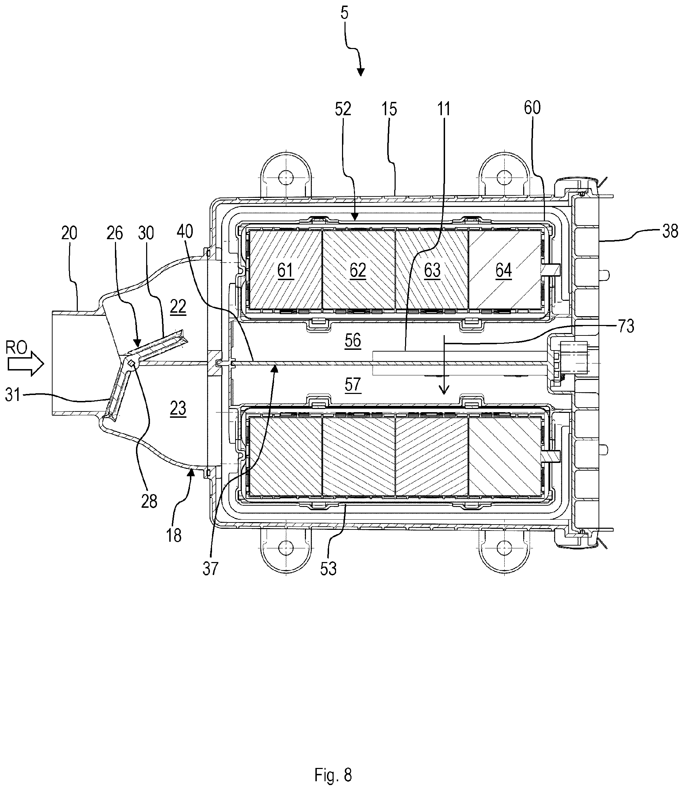

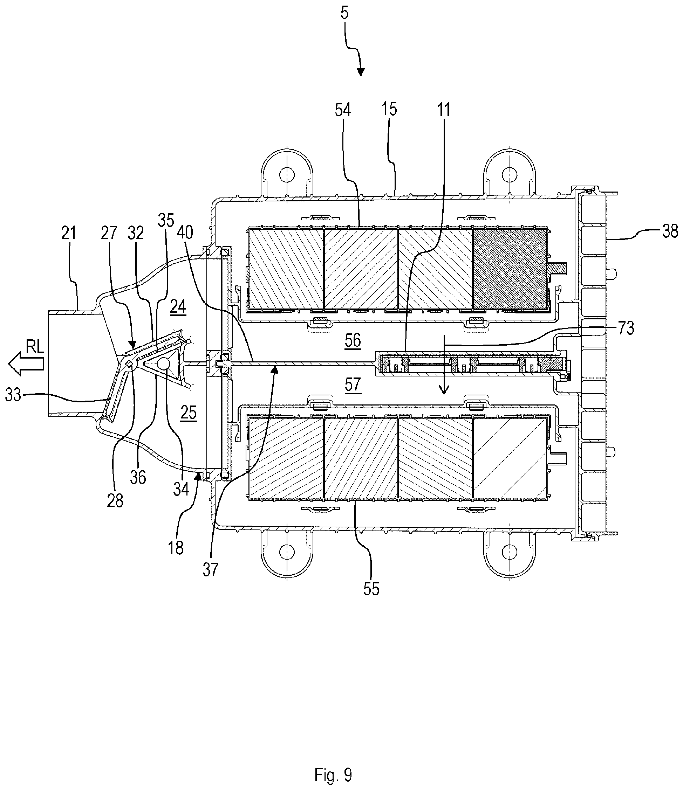

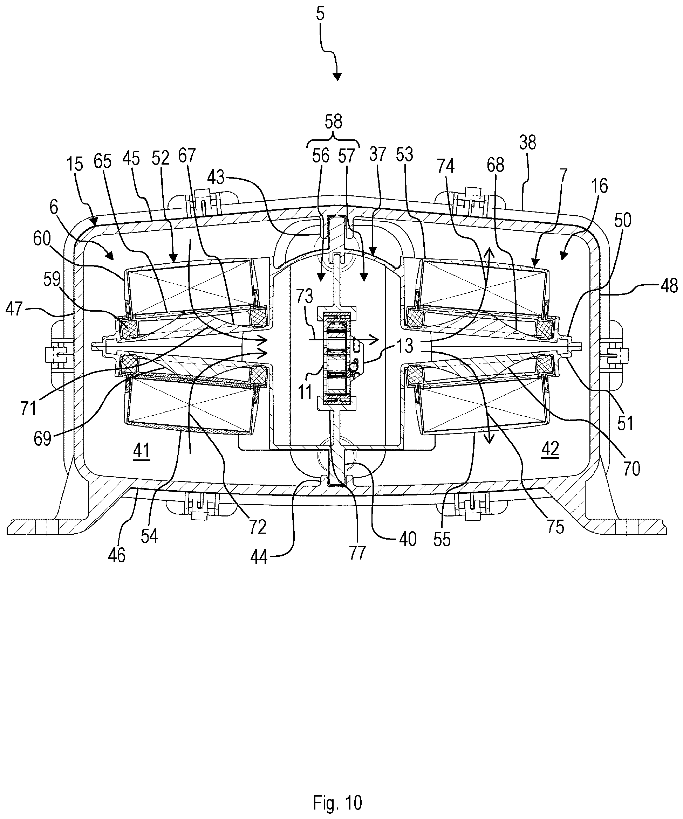

Fig. 3 shows a schematic perspective view of the sorption filter device 5 as explained before. Fig. 4 shows a further schematic perspective view of the sorption filter device 5. Fig. 5 shows a schematic perspective exploded view of the sorption filter device 5. Fig. 6 shows a schematic front view of the sorption filter device 5. Fig. 7 shows a schematic side view of the sorption filter device 5. Fig. 8 shows a cross-sectional view of the sorption filter device 5 according to the sectional line IIX-IIX of Fig. 7. Fig. 9 shows a further cross-sectional view of the sorption filter device 5 according to the sectional line IX-IX of Fig. 7. Fig. 10 shows a cross-sectional view of the sorption filter device 5 according to the sectional line X-X of Fig. 7. In the following, Figs. 3 to 10 will be referred to at the same time.

The sorption filter device 5 comprises a housing 15 for receiving a removable sorption filter element 16. The housing 15 can have a rectangular cross-section. The housing 15 encompasses an inner space or interior space 17. The sorption filter element 16 is arranged within the interior space 17. The sorption filter element 16 comprises the sorption filter apparatuses 6, 7, the heater 11 and the thermocouples 12, 13. The sorption filter element 16 is exchangeable. The sorption filter apparatuses 6, 7 are also exchangeable. The sorption filter element 16 will be explained in detail later.

An inlet/outlet apparatus 18 is attached to the housing 15. The inlet/outlet apparatus 18 can be bolted to the housing 15. A sealing element 19 is positioned between the housing 15 and the inlet/outlet apparatus 18. The sealing element 19 can be made of rubber or polyurethane, for example. The sealing element 19 seals the inlet/outlet apparatus 18 in a fluidtight manner against the housing 15.

The inlet/outlet apparatus 18 comprises a first inlet/outlet 20 and a second inlet/outlet 21. The first inlet/outlet 20 can be named upper inlet/outlet or top inlet/outlet. The second inlet/outlet 21 can be named lower inlet/outlet or bottom inlet/outlet. The inlets/outlets 20, 21 are fluidly disconnected from each other. Raw air RO can be supplied to the sorption filter element 16 via the first inlet/outlet 20 and clean air RL can be supplied to the passenger compartment 3 via the second inlet/outlet 21.

The first inlet/outlet 20 branches into two fluid channels 22, 23 that lead into the interior space 17. The second inlet/outlet 21 branches into two fluid channels 24, 25 that also lead into the interior space 17. The fluid channels 22, 23, 24, 25 are all fluidly disconnected from each other. Via the fluid channels 22, 23, raw air RO can be supplied to the sorption filter element 16. Via the fluid channels 24, 25, clean air RL can be guided away from the sorption filter element 16 into the passenger compartment 3.

The inlet/outlet apparatus 18 has a first flap 26 assigned to the first inlet/outlet 20 and a second flap 27 assigned to the second inlet/outlet 21. The first flap 26 is arranged within the first inlet/outlet 20. The second flap 27 is arranged within the second inlet/outlet 21. The flaps 26, 27 are connected to each other by means of a rotation shaft 28. The rotation shaft 28 is rotatably supported in the inlet/outlet apparatus 18. The rotation shaft 28 can be driven by means of a drive 29. The drive 29 can be an electric motor. The first flap 26 comprises two plate-shaped arm sections 30, 31. Also, the second flap 27 comprises two plate-shaped arm sections 32, 33. The first flap 26 can be named upper flap or top flap. The second flap 27 can be named lower flap or bottom flap.

The first flap 26 and the second flap 27 are both attached to the rotation shaft 28 so that the drive 29 can move both flaps 26, 27 at the same time. The first flap 26 can either close the fluid channel 22 or the fluid channel 23. The second flap 27 can either close the fluid channel 24 or the fluid channel 25. In other words, the flaps 26, 27 can either close the fluid channels 22, 24 or the fluid channels 23, 25. When the fluid channel 22 is open, the fluid channel 23 is closed. When the fluid channel 23 is open, the fluid channel 22 is closed. When the fluid channel 24 is open, the fluid channel 25 is closed. When the fluid channel 25 is open, the fluid channel 24 is closed.

The inlet/outlet apparatus 18 further comprises an outlet 34 for discharging the loaded regeneration air R2 into the environment U. The outlet 34 is fluidly connected to a window 35 (Fig. 9) that opens into the fluid channel 24 and to a window 36 that opens into the fluid channel 25. When the second flap 27 closes the fluid channel 25, the second flap 27 also closes the window 35. When the second flap 27 closes the fluid channel 24, the second flap 27 also closes the window 36. In other words, when the fluid channel 24 is open, the window 36 is open. When the fluid channel 25 is open, the window 35 is open.

Now returning to the sorption filter element 16, the sorption filter element 16 comprises a frame 37 and an end cap 38. The frame 37 is connected to the end cap 38. The frame 37 and the end cap 38 can be designed as an integral part. The end cap 38 is suitable for closing the housing 15 facing away from the inlet/outlet apparatus 18. The sorption filter element 16 or the end cap 38 can be connected to the housing 15 by means of attaching elements 39 of which only one is provided as a reference sign.

The frame 37 comprises a separating wall 40 that separates the interior space 17 into two interior space sections 41, 42. The separating wall 40 is guided within the housing 15 by means of two guide tracks 43, 44. The guide tracks 43, 44 can be provided on a ceiling 45 and a bottom 46 of the housing. The ceiling 45 and the bottom 46 are connected to each other by sidewalls 47, 48.

The separating wall 40 carries or supports the heater 11. The heater 11 can be attached to the separating wall 40. The heater 11 is electrically connected to a plug 49 which protrudes out of the end cap 38. By means of the plug 49, the heater 11 can be energized. The heater 11 is fluid permeable. That means that air, in particular unloaded regeneration air R1, can flow through the heater 11. For this purpose, the heater 11 can at least partly be grid shaped.

The frame 37 further comprises a first carrier 50 and a second carrier 51. The first carrier 50 and the second carrier 51 can be connected to each other. The first carrier 50 carries two sorption filter bodies 52, 53. The second carrier 51 carries two sorption filter bodies 54, 55. The sorption filter bodies 52, 54 together form the first sorption filter apparatus 6. The sorption filter bodies 53, 55 together form the second sorption filter apparatus 7.

The first carrier 50 and the second carrier 51 encompass a first intermediate space section 56 and a second intermediate space section 57. The intermediate space sections 56, 57 are separated from each other by means of the separating wall 40. The intermediate space sections 56, 57 together form an intermediate space 58 that is enclosed or encompassed by the frame 37, in particular by the carriers 50, 51. The second thermocouple 13 is arranged within the second intermediate space section 57. The first thermocouple 12 which is not shown in Fig. 10 can be arranged within the first intermediate space section 56.

Each sorption filter body 52, 53, 54, 55 comprises a sealing element 59 that seals against the first carrier 50 or the second carrier 51. The sealing element 59 can be made of rubber, polyurethane or the like. Each sorption filter body 52, 53, 54, 55 further comprises a housing 60 that carries the sealing element 59. The sealing element 59 can be glued to the housing 60. The housing 60 is square-shaped. The housing 60 is at least partly fluid permeable. The housing 60 encompasses a plurality of different sorption filter body sections 61, 62, 63, 64 which are arranged within the housing 60. The sorption filter body sections 61, 62, 63, 64 can comprise different sorbents 8, 9. The sorption filter body sections 61, 62, 63, 64 are covered by a fluid-permeable sorption filter body grid 65. The sorption filter body grid 65 can be named first grid.

The sorption filter bodies 52, 53, 54, 55 are connected to the carriers 50, 51 by means of snap hooks 66 (Fig. 5) of which only one is provided with a reference sign. The carriers 50, 51 comprise protrusions 67, 68, 69, 70 that press against the sorption filter body grids 65 of the sorption filter bodies 52, 53, 54, 55 when the sorption filter bodies 52, 53, 54, 55 are mounted to the carriers 50, 51 or the frame 37.

For exchanging the sorption filter bodies 52, 53, 54, 55, the attaching elements 39 are opened, and the sorption filter element 16 is pulled out of the housing 15. Then, the sorption filter bodies 52, 53, 54, 55 are demounted from the carriers 50, 51 and can be replaced by new sorption filter bodies 52, 53, 54, 55.

The functionality of the sorption filter device 5 is explained in the following. In the sorption mode M1 of the first sorption filter apparatus 6, the flaps 26, 27 close the fluid channels 23, 25 and open the fluid channels 22, 24. The window 35 is closed by means of the second flap 27. The window 36 is open. Raw air RO is supplied to the interior space 17 via the first inlet/outlet 20. In particular, the raw air RO is supplied to the first interior space section 41.

The raw air RO is passed through the first sorption filter apparatus 6 and accordingly through the sorption filter bodies 52, 54 of the first sorption filter apparatus 6 shown with arrows 71, 72 in Fig. 10. The raw air RO is filtered by means of the sorption filter body sections 61, 62, 63, 64 and enters the intermediate space 58 via the sorption filter body grids 65 of the sorption filter bodies 52, 54 as clean air RL. In particular, the clean air RL enters the first intermediate space section 56. From the first intermediate space section 56, the purified raw air RO is fed back to the passenger compartment 3 as clean air RL via the second inlet/outlet 21 and the fluid channel 24.

While the first sorption filter apparatus 6 is in the sorption mode M1, the second sorption filter apparatus 7 comprising the sorption filter bodies 53, 55 is in the desorption mode M2. Since the fluid channels 23, 25 are closed, the raw air RO cannot enter the second intermediate space section 57 of the frame 37. However, as the heater 11 is fluid permeable, clean air RL passes through the heater 11 as shown by an arrow 73.

The clean air RL is used as unloaded regeneration air R1 for regenerating the second sorption filter apparatus 7. Thus, the clean air RL passes as unloaded regeneration air R1 through the sorption filter bodies 53, 55 as shown with arrows 74, 75 in Fig. 10. Since the unloaded regeneration air R1 passes the heater 11, heat Q is applied to the unloaded regeneration air R1. The unloaded regeneration air R1 passes through the sorption filter body grids 65 of the sorption filter bodies 53, 55 and leaves the sorption filter device 5 via the window 36 and the outlet 34 into the environment U. The unloaded regeneration air R1 supplies heat Q to the sorbents 8, 9 when passing the sorption filter bodies 53, 55.

To put the first sorption filter apparatus 6 into the desorption mode M2 and the second sorption filter apparatus 7 into the sorption mode M1, the drive 29 is energized to close the fluid channels 22, 24 and open the fluid channels 23, 25 by means of the flaps 26, 27. The afore mentioned functionality is the same.

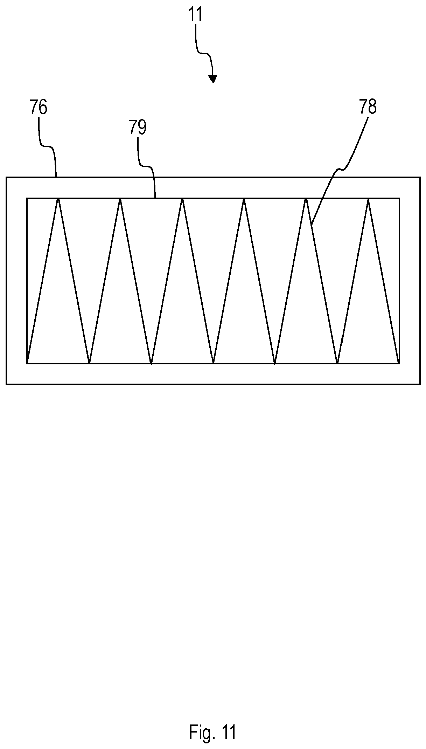

Fig. 11 shows one embodiment of a heater 11 as mentioned before. The heater 11 can be a PTC-heater (positive temperature coefficient). The heater 11 can comprise a frame 76 which can be made of plastic. The frame 76 can also be made of a ceramic material. The separating wall 40 carries the frame 76. A receiving section 77 (Fig. 10) is provided for this purpose at the separating wall 40.

The heater 11 comprises a heater grid 78 that is fluid permeable. The heater grid 78 can be named second grid. The frame 76 carries the heater grid 78. The heater grid 78 can be made of a metallic material. The heater grid 78 can be energized to supply heat Q to the unloaded regeneration air R1 that passes the heater grid 78. As mentioned before, clean air RL can be used as unloaded regeneration air R1.

The frame 76 has a window 79 that is covered by the heater grid 78. There can be more than one window 79. Thus, there can be also more than one heater grid 78. The number of windows 79 is arbitrary. The heater grid 78 can have zig-zag-shape as shown in Fig. 11. However, the heater grid 78 can also be mesh-like or lattice-like. The heater 11 and in particular the heater grid 78 is fluid permeable so that the unloaded regeneration air R1 can pass the heater 11.

### REFERENCE SIGNS LIST

- 1: Motor vehicle
- 2: Body
- 3: Volume/passenger compartment
- 4: HVAC system
- 5: Sorption filter device
- 6: Sorption filter apparatus
- 7: Sorption filter apparatus
- 8: Sorbent
- 9: Sorbent
- 10: Blower
- 11: Heater
- 12: Thermocouple
- 13: Thermocouple
- 14: Blower
- 15: Housing
- 16: Sorption filter element
- 17: Interior space
- 18: Inlet/outlet apparatus
- 19: Sealing element
- 20: Inlet/outlet
- 21: Inlet/outlet
- 22: Fluid channel
- 23: Fluid channel
- 24: Fluid channel
- 25: Fluid channel
- 26: Flap
- 27: Flap
- 28: Rotation shaft
- 29: Drive
- 30: Arm section
- 31: Arm section
- 32: Arm section
- 33: Arm section
- 34: Outlet
- 35: Window
- 36: Window
- 37: Frame
- 38: End cap
- 39: Attaching element
- 40: Separating wall
- 41: Interior space section
- 42: Interior space section
- 43: Guide track
- 44: Guide track
- 45: Ceiling
- 46: Bottom
- 47: Sidewall
- 48: Sidewall
- 49: Plug
- 50: Carrier
- 51: Carrier
- 52: Sorption filter body
- 53: Sorption filter body
- 54: Sorption filter body
- 55: Sorption filter body
- 56: Intermediate space section
- 57: Intermediate space section
- 58: Intermediate space
- 59: Sealing element
- 60: Housing
- 61: Sorption filter body section
- 62: Sorption filter body section
- 63: Sorption filter body section
- 64: Sorption filter body section
- 65: Sorption filter body grid
- 66: Snap hook
- 67: Protrusion
- 68: Protrusion
- 69: Protrusion
- 70: Protrusion
- 71: Arrow
- 72: Arrow
- 73: Arrow
- 74: Arrow
- 75: Arrow
- 76: Frame
- 77: Receiving section
- 78: Heater grid
- 79: Window

- M1: Sorption mode
- M2: Desorption mode
- Q: Heat
- R1: Regeneration air
- R2: Regeneration air
- RL: Clean air
- RO: Raw air
- U: Environment

## Claims

1. A sorption filter element (16) for a sorption filter device (5), the sorption filter element (16) comprising:
a heater (11);
a frame (37) enclosing an intermediate space (58) and comprising a separating wall (40) running through the intermediate space (58), the separating wall (40) being configured to receive the heater (11),
wherein the heater (11) is configured to heat regeneration air (R1) within the intermediate space (58), and comprises a heater grid (78) through which the regeneration air (R1) flows; and
one or more sorption filter bodies (52, 53, 54, 55) comprising at least one sorbent (8, 9), the one or more sorption filter bodies (52, 53, 54, 55) being configured to remove carbon dioxide (CO2) and/or water (H2O) from raw air (RO) to turn the raw air (RO) into clean air (RL), and **characterised in that**,
each of the one or more sorption filter bodies (52, 53, 54, 55) comprises a sorption filter body grid (65) through which the clean air (RL) flows into the intermediate space (58) and through which the heated regeneration air (R1) flows out of the intermediate space (58), and
wherein the separating wall (40) is configured to be guided along guide tracks (43, 44) of a housing (15) of the sorption filter device (5) when moving the sorption filter element (16) out of the housing (15) and into the housing (15), and
the sorption filter element (16) further comprises an end cap (38) configured to close the housing (15), the end cap (38) being attached to the frame (37).

2. The sorption filter element (16) according to claim 1, wherein the one or more sorption filter bodies (52, 53, 54, 55) are disposed on respective opposing sides of the frame (37).

3. The sorption filter element (16) according to one of claims 1 - 2, wherein the heated regeneration (R1) air flows out of the intermediate space (58) into an environment (U) via an outlet (34).

4. The sorption filter element (16) according to one of claims 1 - 3, wherein the separating wall (40) is disposed along a central portion of the intermediate space (58).

5. The sorption filter element (16) according to one of claims 1 - 4, wherein the separating wall (40) partitions the intermediate space (58) into a first intermediate space section (56) and a second intermediate space section (57), and
the regeneration air (R1) flows through the heater grid (78) from the first intermediate space section (56) into the second intermediate space section (57) or vice versa.

6. The sorption filter element (16) according to one of claims 1 - 5, wherein the frame (37) comprises a first carrier (50) and a second carrier (51) configured to carry the one or more sorption filter bodies (52, 53, 54, 55), the first carrier (50) and the second carrier (51) enclosing the intermediate space (58).

7. The sorption filter element (16) according to one of claims 1 - 6, wherein the frame (37) comprises protrusions (67, 68, 69, 70) configured to press against the sorption filter body grid (65).

8. The sorption filter element (16) according to one of claims 1 - 7, further comprising two pairs of the one or more sorption filter bodies (52, 53, 54, 55), the two pairs respectively forming sorption filter apparatuses (6, 7) configured to be interchangeably brought from a sorption mode (M1) into a desorption mode (M2) and vice versa.

9. The sorption filter element (16) according to claim 8, wherein each of the two pairs of the one or more sorption filter bodies (52, 53, 54, 55) is arranged in a V-configuration or a parallel configuration.

10. A sorption filter device (5) comprising:
the sorption filter element (16) according to one of claims 1 - 9; and
a housing (15) configured to receive the sorption filter element (16).

11. The sorption filter device (5) according to claim 10, further comprising an inlet/outlet apparatus (18) attached to the housing (15) and configured to:
supply the raw air (RO) to the sorption filter element (16); and
guide the clean air (RL) away from the sorption filter element (16).

12. The sorption filter device (5) according to claim 11, wherein inlet/outlet apparatus (18) comprises an outlet (34) configured to discharge the heated regeneration air (R1) into an environment (U).

13. The sorption filter device (5) according to claim 11 or 12, wherein the inlet/outlet apparatus (18) comprises a first inlet/outlet (20) and a second inlet/outlet (21), each of the first inlet/outlet (20) and the second inlet/outlet (21) branching into two fluid channels (22, 23, 24, 25), and the two fluid channels (24, 25) of the second inlet/outlet (21) being fluidly connected to the intermediate space (58).

14. The sorption filter device (5) according to claim 13, wherein the inlet/outlet apparatus (18) further comprises movable flaps (26, 27) configured to alternate opening and closing one of the two fluid channels (22, 23) of the first inlet/outlet (20) and one of the two fluid channels (24, 25) of the second inlet/outlet (21).

## Patentansprüche

1. Sorptionsfilterelement (16) für eine Sorptionsfiltereinrichtung (5), wobei das Sorptionsfilterelement (16) Folgendes umfasst:
eine Heizeinrichtung (11);
einen Rahmen (37), der einen Zwischenraum (58) umschließt und eine Trennwand (40) umfasst, die durch den Zwischenraum (58) verläuft, wobei die Trennwand (40) so konfiguriert ist, dass sie die Heizeinrichtung (11) aufnimmt,
wobei die Heizeinrichtung (11) so konfiguriert ist, dass sie Regenerationsluft (R1) innerhalb des Zwischenraums (58) erwärmt, und ein Heizgitter (78) umfasst, durch das die Regenerationsluft (R1) strömt; und
einen oder mehrere Sorptionsfilterkörper (52, 53, 54, 55), die mindestens ein Sorptionsmittel (8, 9) umfassen, wobei der eine oder mehrere Sorptionsfilterkörper (52, 53, 54, 55) so konfiguriert sind, dass sie Kohlendioxid (CO2) und/oder Wasser (H2O) aus der Rohluft (RO) entfernen, um die Rohluft (RO) in Reinluft (RL) umzuwandeln, und **dadurch gekennzeichnet, dass**
jeder der einen oder mehrere Sorptionsfilterkörper (52, 53, 54, 55) ein Sorptionsfilterkörpergitter (65) umfasst, durch das die Reinluft (RL) in den Zwischenraum (58) strömt und durch das die erwärmte Regenerationsluft (R1) aus dem Zwischenraum (58) austritt, und
wobei die Trennwand (40) so konfiguriert ist, dass sie beim Bewegen des Sorptionsfilterelements (16) aus dem Gehäuse (15) heraus und in das Gehäuse (15) hinein entlang Führungsschienen (43, 44) eines Gehäuses (15) der Sorptionsfiltereinrichtung (5) geführt wird, und
das Sorptionsfilterelement (16) ferner eine Endkappe (38) umfasst, die so konfiguriert ist, dass sie das Gehäuse (15) verschließt, wobei die Endkappe (38) an dem Rahmen (37) befestigt ist.

2. Sorptionsfilterelement (16) nach Anspruch 1, wobei der eine oder mehrere Sorptionsfilterkörper (52, 53, 54, 55) auf jeweils gegenüberliegenden Seiten des Rahmens (37) angeordnet sind.

3. Sorptionsfilterelement (16) nach einem der Ansprüche 1 bis 2, wobei die erwärmte Regenerationsluft (R1) aus dem Zwischenraum (58) über einen Auslass (34) in eine Umgebung (U) strömt.

4. Sorptionsfilterelement (16) nach einem der Ansprüche 1 bis 3, wobei die Trennwand (40) entlang eines Mittelabschnitts des Zwischenraums (58) angeordnet ist.

5. Sorptionsfilterelement (16) nach einem der Ansprüche 1 bis 4, wobei die Trennwand (40) den Zwischenraum (58) in einen ersten Zwischenraumabschnitt (56) und einen zweiten Zwischenraumabschnitt (57) unterteilt und
die Regenerationsluft (R1) durch das Heizgitter (78) vom ersten Zwischenraumabschnitt (56) in den zweiten Zwischenraumabschnitt (57) oder umgekehrt strömt.

6. Sorptionsfilterelement (16) nach einem der Ansprüche 1 bis 5, wobei der Rahmen (37) einen ersten Träger (50) und einen zweiten Träger (51) umfasst, die so konfiguriert sind, um den einen oder mehrere Sorptionsfilterkörper (52, 53, 54, 55) zu tragen, wobei der erste Träger (50) und der zweite Träger (51) den Zwischenraum (58) umschließen.

7. Sorptionsfilterelement (16) nach einem der Ansprüche 1 bis 6, wobei der Rahmen (37) Vorsprünge (67, 68, 69, 70) umfasst, die so konfiguriert sind, dass sie gegen das Sorptionsfilterkörpergitter (65) drücken.

8. Sorptionsfilterelement (16) nach einem der Ansprüche 1 bis 7, das ferner zwei Paare des einen oder mehrere Sorptionsfilterkörper (52, 53, 54, 55) umfasst, wobei die beiden Paare jeweils Sorptionsfiltervorrichtungen (6, 7) bilden, die so konfiguriert sind, dass sie austauschbar von einem Sorptionsmodus (M1) in einen Desorptionsmodus (M2) und umgekehrt gebracht werden können.

9. Sorptionsfilterelement (16) nach Anspruch 8, wobei jedes der beiden Paare des einen oder mehrerer Sorptionsfilterkörper (52, 53, 54, 55) in einer V-Konfiguration oder einer Parallelkonfiguration angeordnet ist.

10. Sorptionsfiltereinrichtung (5) umfassend:
das Sorptionsfilterelement (16) nach einem der Ansprüche 1 bis 9; und
ein Gehäuse (15), das zur Aufnahme des Sorptionsfilterelements (16) konfiguriert ist.

11. Sorptionsfiltereinrichtung (5) nach Anspruch 10, die ferner eine Einlass-/Auslassvorrichtung (18) umfasst, die an dem Gehäuse (15) angebracht und so konfiguriert ist, dass sie:
die Rohluft (RO) dem Sorptionsfilterelement (16) zuführt; und
die Reinluft (RL) vom Sorptionsfilterelement (16) fortleitet.

12. Sorptionsfiltereinrichtung (5) nach Anspruch 11, wobei die Einlass-/Auslassvorrichtung (18) einen Auslass (34) umfasst, der so konfiguriert ist, dass er die erwärmte Regenerationsluft (R1) in eine Umgebung (U) abführt.

13. Sorptionsfiltereinrichtung (5) nach Anspruch 11 oder 12, wobei die Einlass-/Auslassvorrichtung (18) einen ersten Einlass/Auslass (20) und einen zweiten Einlass/Auslass (21) umfasst, wobei sich sowohl der erste Einlass/Auslass (20) als auch der zweite Einlass/Auslass (21) in zwei Fluidkanäle (22, 23, 24, 25) verzweigen, und wobei die beiden Fluidkanäle (24, 25) des zweiten Ein-/Auslasses (21) fluidisch mit dem Zwischenraum (58) verbunden sind.

14. Sorptionsfiltereinrichtung (5) nach Anspruch 13, wobei die Einlass-/Auslassvorrichtung (18) ferner bewegliche Klappen (26, 27) umfasst, die so konfiguriert sind, dass sie abwechselnd einen der beiden Fluidkanäle (22, 23) des ersten Einlass-/Auslasses (20) und einen der beiden Fluidkanäle (24, 25) des zweiten Einlass-/Auslasses (21) öffnen und schließen.

## Revendications

1. Élément de filtre à sorption (16) pour un dispositif de filtre à sorption (5), l'élément de filtre à sorption (16) comprenant:
un dispositif de chauffage (11);
un cadre (37) entourant un espace intermédiaire (58) et comprenant une paroi de séparation (40) traversant l'espace intermédiaire (58), la paroi de séparation (40) étant configurée pour recevoir le dispositif de chauffage (11),
dans lequel le dispositif de chauffage (11) est configuré pour chauffer l'air de régénération (R1) à l'intérieur de l'espace intermédiaire (58) et comprend une grille de chauffage (78) à travers laquelle l'air de régénération (R1) s'écoule; et
un ou plusieurs corps de filtre à sorption (52, 53, 54, 55) comprenant au moins un sorbant (8, 9), l'un ou plusieurs corps de filtre à sorption (52, 53, 54, 55) étant configurés pour éliminer le dioxyde de carbone (CO2) et/ou l'eau (H2O) de l'air brut (RO) afin de transformer l'air brut (RO) en air pur (RL), et **caractérisé en ce que**
chacun d'un ou de plusieurs corps de filtre à sorption (52, 53, 54, 55) comprend une grille de corps de filtre à sorption (65) à travers laquelle l'air pur (RL) s'écoule dans l'espace intermédiaire (58) et à travers laquelle l'air de régénération chauffé (R1) s'écoule hors de l'espace intermédiaire (58), et
dans lequel la paroi de séparation (40) est configurée pour être guidée le long des rails de guidage (43, 44) d'un boîtier (15) du dispositif de filtre à sorption (5) lors du déplacement de l'élément de filtre à sorption (16) hors du boîtier (15) et dans le boîtier (15), et
l'élément de filtre à sorption (16) comprend en outre un bouchon d'extrémité (38) configuré pour fermer le boîtier (15), le bouchon d'extrémité (38) étant fixé au cadre (37).

2. Élément de filtre à sorption (16) selon la revendication 1, dans lequel l'un ou plusieurs corps de filtre à sorption (52, 53, 54, 55) sont disposés sur les côtés opposés respectifs du cadre (37).

3. Élément de filtre à sorption (16) selon l'une quelconque des revendications 1 à 2, dans lequel l'air de régénération chauffé (R1) s'écoule hors de l'espace intermédiaire (58) dans un environnement (U) à travers une sortie (34).

4. Élément de filtre à sorption (16) selon l'une quelconque des revendications 1 à 3, dans lequel la paroi de séparation (40) est disposée le long d'une section centrale de l'espace intermédiaire (58).

5. Élément de filtre à sorption (16) selon l'une quelconque des revendications 1 à 4, dans lequel la paroi de séparation (40) divise l'espace intermédiaire (58) en une première section d'espace intermédiaire (56) et une deuxième section d'espace intermédiaire (57), et
l'air de régénération (R1) s'écoule à travers la grille de chauffage (78) depuis la première section d'espace intermédiaire (56) vers la deuxième section d'espace intermédiaire (57) ou vice versa.

6. Élément de filtre à sorption (16) selon l'une quelconque des revendications 1 à 5, dans lequel le cadre (37) comprend un premier support (50) et un deuxième support (51) configurés pour porter l'un ou plusieurs corps de filtre à sorption (52, 53, 54, 55), le premier support (50) et le deuxième support (51) entourant l'espace intermédiaire (58).

7. Élément de filtre à sorption (16) selon l'une quelconque des revendications 1 à 6, dans lequel le cadre (37) comprend des saillies (67, 68, 69, 70) configurées pour appuyer contre la grille du corps de filtre à sorption (65).

8. Élément de filtre à sorption (16) selon l'une quelconque des revendications 1 à 7, comprenant en outre deux paires d'un ou de plusieurs corps de filtre à sorption (52, 53, 54, 55), les deux paires formant respectivement des appareils de filtre à sorption (6, 7) configurés pour être amenés de manière interchangeable d'un mode de sorption (M1) à un mode de désorption (M2) et vice versa.

9. Élément de filtre à sorption (16) selon la revendication 8, dans lequel chacune des deux paires d'un ou de plusieurs corps de filtre à sorption (52, 53, 54, 55) est disposée selon une configuration en V ou une configuration parallèle.

10. Dispositif de filtre à sorption (5) comprenant:
l'élément de filtre à sorption (16) selon l'une quelconque des revendications 1 à 9; et
un boîtier (15) configuré pour recevoir l'élément de filtre à sorption (16).

11. Dispositif de filtre à sorption (5) selon la revendication 10, comprenant en outre un dispositif d'entrée/de sortie (18) fixé au boîtier (15) et configuré pour:
fournir l'air brut (RO) à l'élément de filtre à sorption (16); et
guider l'air pur (RL) loin de l'élément de filtre à sorption (16).

12. Dispositif de filtre à sorption (5) selon la revendication 11, dans lequel l'appareil d'entrée/de sortie (18) comprend une sortie (34) configurée pour évacuer l'air de régénération chauffé (R1) dans un environnement (U).

13. Dispositif de filtre à sorption (5) selon la revendication 11 ou 12, dans lequel l'appareil d'entrée/de sortie (18) comprend une première entrée/sortie (20) et une deuxième entrée/sortie (21), chacune de la première entrée/sortie (20) et de la deuxième entrée/sortie (21) se ramifiant en deux canaux de fluide (22, 23, 24, 25), et les deux canaux de fluide (24, 25) de la deuxième entrée/sortie (21) étant reliés en communication fluidique à l'espace intermédiaire (58).

14. Dispositif de filtre à sorption (5) selon la revendication 13, dans lequel l'appareil d'entrée/de sortie (18) comprend en outre des volets mobiles (26, 27) configurés pour ouvrir et fermer alternativement l'un des deux canaux de fluide (22, 23) de la première entrée/sortie (20) et l'un des deux canaux de fluide (24, 25) de la deuxième entrée/sortie (21).
